# EUROPEAN PATENT APPLICATION

(11) **EP 3 522 068 A1**
(43) Date of publication of application: **07.08.2019**
(21) Application number: 18154445.3
(22) Date of filing: 31.01.2018
(51) Int. Cl.: G06K 9/00

(54) **A VISION SYSTEM AND METHOD FOR AUTONOMOUS DRIVING AND/OR DRIVER ASSISTANCE IN A MOTOR VEHICLE**

(71) Applicant: Veoneer Sweden AB, 447 83 Vårgårda (SE)
(72) Inventor: KERKHOFF, Adrian, 80636 München (DE); MATTHEWS, Ryan, 80805 München (DE); SABELSTRÖM, Erik, 80992 München (DE)
(74) Representative: Müller Verweyen

(57) **Abstract**

A vision system and method for autonomous driving and/or driver assistance in a motor vehicle are presented. The vision system (10) comprises an imaging apparatus (11) adapted to capture images (6) from a surrounding of the motor vehicle (1), and a data processing apparatus (14) adapted to perform image processing on the images (6) captured by the imaging apparatus (11). The image processing comprises executing an object detector (300) adapted to detect objects in captured images (6), yielding a plurality of object candidates (203, 204). The data processing apparatus (14) is adapted to execute a plausibility checker (102) adapted to estimate, on the basis of a comparison of properties of any two object candidates (203, 204) output by the object detector (300), whether a first object candidate (203, 204) belongs to a light reflection (201) of an object (202) corresponding to the second object candidate (202).

## Description

The invention relates to a vision system for a motor vehicle, comprising an imaging apparatus adapted to capture images from a surrounding of the motor vehicle, and a data processing apparatus adapted to perform image processing on the images captured by the imaging apparatus, wherein said image processing comprises executing an object detector adapted to detect objects in captured images, yielding a plurality of object candidates. The invention further relates to a corresponding vision method for a motor vehicle.

Typically, modern motor vehicles provide one or more driver assistance systems, for example adaptive/autonomous cruise control, autonomous emergency braking, or others. Many of said driver assistance systems require the detection of objects with one or more cameras. The vision algorithms used by the vision system and/or the vision method scan the captured images for objects and forward the potential objects/object candidates to the driver assistance system. However, reflections of a physical object on a wet road potentially disturb object detection by the object detector. Especially during night time and on wet roads, objects like other vehicles can be reflected on the road surface and false objects are then considered by the driver assistance system. This can lead to undesired and even dangerous behavior of the driver assistance system, for example sudden breaking of the host/ego vehicle.

The problem underlying the present invention is to provide a vision system and method able to reduce the disturbing influence of light reflections and to detect physical objects in the vehicle environment reliably and efficiently.

The invention solves this problem with the features of the independent claims.

The invention suggests that the data processing apparatus is adapted to execute a plausibility checker adapted to estimate, on the basis of a comparison of properties of any two object candidates output by the object detector, whether a first object candidate belongs to a light reflection of an object corresponding to a second object candidate.

The invention has realized that the reflection of any physical object on the road surface can make the object detector detecting a reflected object candidate corresponding to a reflection on the road of said physical object. Therefore, the presence of a reflection leads to at least two object candidates that are detected in the captured image. Each physical object in the surrounding of the vehicle that is captured by the imaging apparatus can lead to a corresponding reflection and thereby to two corresponding object candidates: the first object candidate and the second object candidate. The plausibility checker is executed on the data processing apparatus to compare any two of the at least two object candidates. Based on said comparison, the estimation is performed whether any first object candidate belongs to a reflection of an object corresponding to any second candidate by the road.

For example the second object candidate can correspond to the physical object and the first object candidates can correspond to the light reflection, in particular by the road, of the physical object.

Advantageously, the plausibility checker takes into account in said estimation whether the longitudinal distance between the two object candidates to be compared falls below a predefined value. The vision system preferably provides information about the distance between the detected objects/object candidates. The longitudinal distance between two object candidates is understood as the longitudinal distance between the corresponding two physical objects.

In a typical driving scenario the longitudinal distance between any two real actual objects should not fall below a predefined distance which might be given by the driving scenario and in particular by the driving speed. Therefore, if the longitudinal distance between any two object candidates is smaller than the predefined distance it is likely that one of the object candidates belongs to a reflection of the physical object or that a dangerous but unlikely situation had occurred. The predefined value can be expressed in pixels or related to a distance, for example in meters and should preferably not exceed the typical size of a vehicle.

In an advantageous embodiment, the plausibility checker takes into account in said estimation whether mirroring occurs between features of the two objects candidates to be compared. The plausibility checker compares the relative position of specific features and/or feature sets of the two object candidates to identify mirrored features of the second object in the reflection in order to increase to reliability of the comparison.

Preferably, the plausibility checker examines whether the specific features of the first object candidate are upside-down compared to corresponding features of the second object candidate. If the physical object is reflected on the road the corresponding reflection is a mirrored image of the physical object that is mirrored in a horizontal plane in case the road is horizontal. This embodiment preferably takes into account that the mirroring inverts the order and the orientation of the features. Also a single feature of the object should be upside-down in the reflection and can be examined.

Preferably, the plausibility checker examines whether reflections of relative positions of bright features, like rear lights, brake lights or license plate, of the two objects candidates to be compared occur, as said bright features are easily detectable.

Preferably the plausibility checker takes into account in the estimation whether mirroring features have the same color, or a color mainly in the same color range. For example, if a physical vehicle is red, it is expected that the mirrored image of this vehicle is red or reddish as well.

Preferably, the plausibility checker takes into account in said estimation whether the two object candidates to be compared are fully visible in the captured image. Typically, the imaging apparatus is mounted so that another vehicle in front of the ego vehicle obstructs the imaging apparatus' view of all possible vehicles in front of the other vehicle. In some embodiments the imaging apparatus is mounted on the windshield. Therefore two fully visible object candidates are likely to correspond to the physical object and the corresponding reflection, but not to two individual actual objects. In other words, the plausibility checker considers two object candidates as belonging to two physical vehicles, rather than to a physical vehicle and its mirror image, if one of the object candidates obstructs the view onto the other vehicle, based on the position of the vehicles and estimated width and height of the mirrored object. In this case, the plausibility checker would let both object candidates pass to further processing.

In a preferred embodiment, the plausibility checker takes into account in said estimation whether the two object candidates to be compared are positioned within a same lane of the road and/or the lateral distance between said two object candidates is smaller than a predefined value to provide a simple but effective plausibility check as the object and its reflection are likely to appear in the same lane as the ego vehicle. If no lane is detectable or no lane markings are present, the lateral distance between the object candidates can be examined. The predefined value can be expressed in pixels or related to a distance, for example in meters and should preferably not exceed the typical size of a vehicle.

Preferably, the plausibility checker takes into account in said estimation whether a first object candidate is closer to the ego vehicle than a second object candidate. Typically, from the point of view of the ego vehicle the object candidate that corresponds to the reflection appears closer than the real physical object. While driving, the possible reflection will be towards the ego vehicle.

In a preferred embodiment, the plausibility checker estimates whether the first object candidate belongs to the reflection depending on one or more of said conditions. In order to yield a more reliable estimation more than one of the aforementioned conditions can preferably be used. Some of the aforementioned conditions are not mandatory in every driving scenario. The result of the assessment of the conditions can be weighted differently, if, for example, a confidence indicator and/or a probability of an object candidate of belonging to a reflection or to an actual object is computed, for example as a score value.

Advantageously, the plausibility checker pre-identifies pairs of object candidates which are to be compared to provide an efficient comparison. In this embodiment the object detector pre-identifies pairs of object candidates that are to be compared so that not any arbitrary pair of object candidates but only specific pairs that are identified by the object detector need to be compared. The pairs of object candidates could be identified by their position within the image as a reflection is typically on the road and thereby represented in the figure as being positioned below the actual object. The distance between any two object candidates can also be an indicator for two object candidates to be a suitable pair.

In a preferred embodiment, a pre-condition checker is executed prior to the plausibility checker, said pre-condition checker checking pre-conditions for mirroring in order to increase the reliability and effectivity of the plausibility checker. Preferably, the plausibility checker performs said estimation only in case the pre-conditions for mirroring are fulfilled to safe computational load advantageously

Preferably, pre-conditions for mirroring comprise the wetness of the road and/or ambient light conditions as in particular wet roads with a high reflectivity in dark/dim ambient light reflect objects and lead to a mirrored object candidate.

Preferably, the plausibility checker uses feature point tracking to identify and/or track the reflection and/or the second object candidate to allow a reliable and efficient comparison. Preferably, the feature point tracking is applied in order to compare trajectories of object candidates to identify reflections as the trajectory of an object and its reflection are dependent on each other.

Advantageously, the plausibility checker computes a confidence indicator, also called score, for the objects as being reflected objects to provide not only binary data but differentiated data.

Preferably, object candidates determined to originate from a light reflection of an object are discarded in the further processing of the object candidates in order to enhance the effectivity of subsequent computations. Reflections do not need to be considered in subsequent computations and can therefore be discarded in said subsequent computations. The number of object candidates is decreased by discarding candidates determined to originate from a light reflection. Discarding said object candidates acts like applying a filter to the set of object candidates leaving a subset of object candidates that has typically less elements as the original set of all object candidates detected by the object detector.

In the following the invention shall be illustrated on the basis of preferred embodiments with reference to the accompanying drawings, wherein:

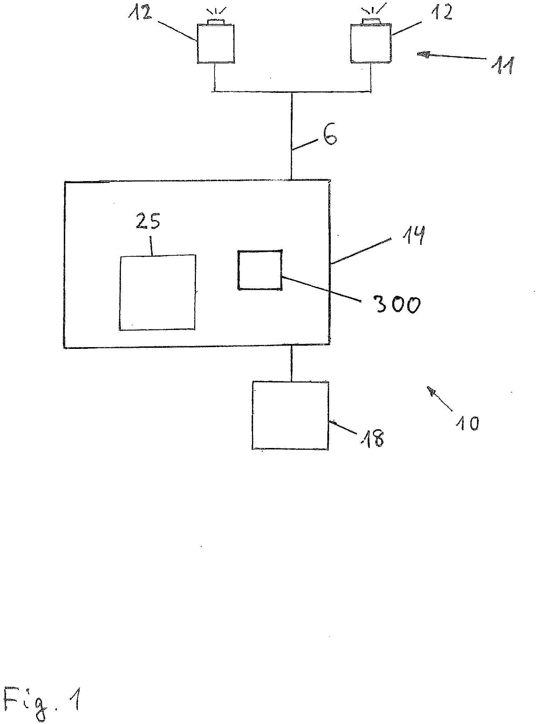

- Fig. 1: shows a schematic diagram of a vision system under the present invention;
- Fig. 2: shows a flow diagram according to an embodiment of the present invention; and
- Fig. 3: shows an image of a scenario of a road with a vehicle and a corresponding reflection.

The vision system 10 is mounted in a motor vehicle and comprises an imaging apparatus 11 for capturing images of a region surrounding the motor vehicle, for example a region in front of the motor vehicle. Preferably the imaging apparatus 11 comprises one or more optical imaging devices 12, in particular cameras, preferably operating in the visible and/or infrared wavelength range, where infrared covers near IR with wavelengths below 5 microns and/or far IR with wavelengths beyond 5 microns. In some embodiments the imaging apparatus 11 comprises a plurality imaging devices 12 in particular forming a stereo imaging apparatus 11. In other embodiments only one imaging device 12 forming a mono imaging apparatus 11 can be used.

The imaging apparatus 11 is coupled to a data processing apparatus 14 adapted to process the image data received from the imaging apparatus 11. The data processing apparatus 14 is preferably a digital device which is programmed or programmable and preferably comprises a microprocessor, microcontroller a digital signal processor (DSP), and/or a microprocessor part in a System-On-Chip (SoC) device, and preferably has access to, or comprises, a data memory 25. The data processing apparatus 14 may comprise a dedicated hardware device, like a Field Programmable Gate Array (FPGA) or an Application Specific Integrated Circuit (ASIC), or an FPGA and/or ASIC part in a System-On-Chip (SoC) device, for performing certain functions, for example controlling the capture of images by the imaging apparatus 11, receiving the electrical signal containing the image information from the imaging apparatus 11, rectifying or warping pairs of left/right images into alignment and/or creating disparity or depth images. The data processing apparatus 14, or part of its functions, can be realized by a System-On-Chip (SoC) device comprising, for example, FPGA, DSP, ARM and/or microprocessor functionality. The data processing apparatus 14 and the memory device 25 are preferably realised in an on-board electronic control unit (ECU) and may be connected to the imaging apparatus 11 via a separate cable or a vehicle data bus. In another embodiment the ECU and one or more of the imaging devices 12 can be integrated into a single unit, where a one box solution including the ECU and all imaging devices 12 can be preferred. All steps from imaging, image processing to possible activation or control of safety device 18 are performed automatically and continuously during driving in real time.

Image and data processing carried out in the processing apparatus 14 advantageously comprises identifying and preferably also classifying possible objects (object candidates) in front of the motor vehicle, such as pedestrians, other vehicles, bi-cyclists and/or large animals, tracking over time the position of objects or object candidates identified in the captured images, and activating or controlling at least one safety device 18 depending on an estimation performed with respect to a tracked object, for example on an estimated collision probability.

The safety device 18 may comprise at least one active safety device and/or at least one passive safety device. In particular, the safety device 18 may comprise one or more of: at least one safety belt tensioner, at least one passenger airbag, one or more restraint systems such as occupant airbags, a hood lifter, an electronic stability system, at least one dynamic vehicle control system, such as a brake control system and/or a steering control system, a speed control system; a display device to display information relating to a detected object; a warning device adapted to provide a warning to a driver by suitable optical, acoustical and/or haptic warning signals.

The invention is applicable to autonomous driving, whereby the ego vehicle 2 is preferably an autonomous vehicle adapted to drive partly or fully autonomously or automatically, and driving actions of the driver are partially and/or completely replaced or executed by the ego vehicle 2.

The safety system 18 preferably comprises one or more driver-assistance systems, the control of which relies on object detection based on captured images 6. The one or more driver assistance systems comprise for example adaptive/autonomous cruise control, autonomous emergency braking and/or others.

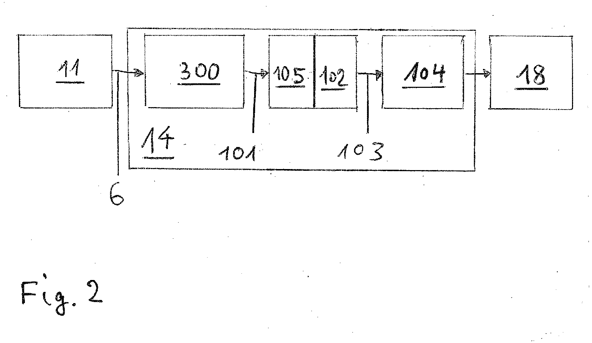

Figure 2 shows a flow diagram according to an embodiment of the present invention. Images 6 are captured by the imaging apparatus 11, preferably an automotive camera. The images 6 are input to the data processing apparatus 14.

Based on the captured images 6 raw object data 101 is produced by an object detector 300 that detects one or more object candidates 203, 204. The raw object data 101 preferably comprises data of the object candidates 203, 204 comprising: image coordinates (x and y) within the image 6 and/or the surrounding, identification number (ID), velocity, the longitudinal and/or lateral distance from the host vehicle, feature locations, feature sets, and/or color. The feature locations can preferably be expressed as a three dimensional vector containing three coordinates including and/or encoding the position and distance between the ego vehicle and specific features of object candidates 203, 204.

The raw object data 101 is output by the object detector 300 to the plausibility checker 102 adapted to estimate, on the basis of a comparison of properties of any two object candidates 203, 204, whether a first object candidate 203 belongs to a road reflection 201 of the object 202 corresponding to the second object candidate 204.

The presence of two object candidates 203, 204 can indicate that there is a reflection 201. If the imaging apparatus 11 is able to see both object candidates 203, 204, the first object candidate 203 and the second object candidate 204, the first object candidate 203 is likely a reflection 201 (ghost) and can be determined and/or classified/labeled as such while the second object candidate 204 is likely an actual object 202 and can be determined and/or classified/labeled as such. Based on the reported object position and the object size, it should not be possible for the imaging apparatus 11 to see through an object detected as the object candidate 203 as an actual object would at least partially occlude the imaging apparatus' 11 view of the actual object 202 that corresponds to the second object candidate 204.

Preferably, the plausibility checker 102 looks at the relative position of shapes, such as the position of the brake lights within the entire image 6 or the relative position of the number plate to the lights, etc. The plausibility checker 102 can also use data based on feature point tracking to track object candidates 203, 204 and to compare their trajectories. The trajectories of an object 202 and its reflection 201 are likely to share a similar evolution which can help to identify the reflection 201.

The plausibility checker 102 uses preferably the entire captured image 6 with all the features and/or at least one feature set including all the objects, the road, the ambient light condition and so on.

Preferably, a pre-condition checker 105 is checking pre-conditions for mirroring prior to the plausibility check by the plausibility checker 102. The pre-condition checker 105 is optional and can in particular be executed on the images 6, information by a rain sensor of the vehicle 1, information by an ambient light sensor of the vehicle 1, and/or others. Thus, pre-conditions 105 can preferably be checked prior to any image processing steps. The pre-condition checker 105 can suggest that reflections 202 are unlikely, and further operation of the plausibility checker 102 can be dispensed with.

The pre-condition checker 105 can comprise steps of examining pre-conditions for mirroring comprising the wetness of the road as preferably inferred by the rain sensor and/or ambient light conditions as preferably inferred by the ambient light sensor.

The plausibility checker 102 preferably determines some confidence indicator, or score, that the two object candidates 203, 204 are in fact mirror images of each other and that the reflection 201 which would have been detected as a vehicle 202 could be discarded and/or being labeled accordingly.

The result of the estimation by the plausibility checker 102 is output to produce corrected object data 103 that is object data without data about reflected objects 201. The reflected objects 201 are preferably removed so that any subsequent analysis of reflected object data can be dispensed with. If the reflected object 201 is detected based on the plausibility checker 102, then a correct object list 103 is created by removing reflected objects 201 and/or classifying reflected objects 201 accordingly. The object candidates 203 determined to originate from a road reflection 201 of an object 202 are discarded, i.e., filtered out, in the further processing of the object candidates 203, 204.

The number of elements in the corrected object data 103 is preferably less than the number of elements in the raw object data 101, since the corrected object data 103 is preferably a subset of the raw object data 101.

The corrected object data 103 is output by the plausibility checker 102 to the driver assistance function 104 which is adapted to control the safety system 18. The driver assistance function 104 can comprise a decision logic to trigger specific actions of the safety system 18. The object candidates 203, 204 which are determined to correspond to light reflections 201 are discarded from further processing, such that they are excluded as potential targets for emergency braking, automatic cruise control, etc.

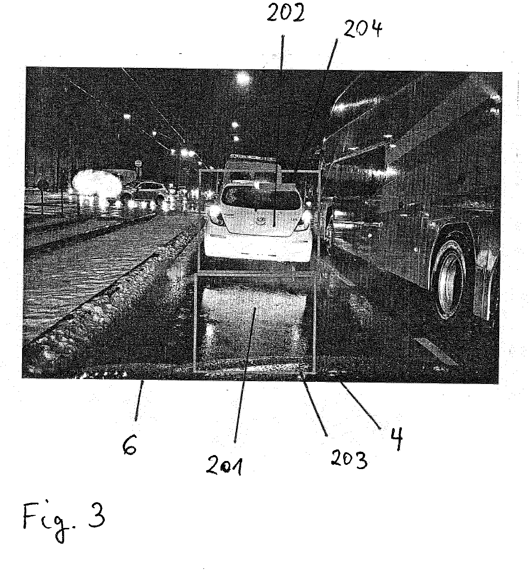

Figure 3 shows the image 6 of a scenario of a road with a vehicle 202 and a corresponding reflection 201. This perspective could be taken from an imaging apparatus 11 being installed on the windshield of the ego vehicle 1. The vehicle 202 is in front of the ego vehicle 1 from where the image 6 is taken and said vehicle 202 moves within the same lane 4 as the ego vehicle 1. The vehicle 202 in front of the ego vehicle 1 blocks the view towards the front and obstructs the view of all possible other vehicles within the ego lane. Therefore, there cannot be two fully visible objects in the ego lane with a minimum longitudinal distance. While driving, the possible reflections 201 will always be towards the ego vehicle 1.

The object detector 300 detects in the image 6 taken by the imaging apparatus 11 at least two object candidates 203, 204 and forwards them to the plausibility checker 102. The plausibility checker 102 analyzes object data/object candidates 203, 204 to estimate reflected objects 201 based on data provided by the object detector 300 or other features as derived based on the captured image 6, for example in the ego vehicle 1 velocity, the velocity of the detected object candidates 203, 204, the indication whether the road is wet, and or others. Also other sensors could provide information to the plausibility checker 102 in order to check pre-conditions for mirroring in the pre-condition checker 105.

The functionality of the plausibility checker 102 is preferably based on a plurality of plausibility checks. For example the plausibility checker 102 checks if object candidates 203, 204 are within the longitudinal threshold distance. Preferably, the plausibility checker assumes a standard physical size of objects candidates in the surrounding as typical objects that are of interest possess a typical size, for example vehicles, pedestrians, cyclists and so on possess a typical size that could be used by the plausibility checker.

Preferably, the plausibility checker 102 checks for mirroring of features sets between the first object candidate 203 and the second object candidate 204, e.g. reflections of relative position of features such as brake lights and license plate.

Based on a plausibility check by the plausibility checker 102 preferably using features such as color and feature location, e.g., the same features are found mirrored, it can be determined if one of the detected vehicles 202 is a reflection 201. The mirrored vehicle 201 appears upside-down compared to the actual vehicle 202.

## Claims

1. A vision system (10) for a motor vehicle (1), comprising
- an imaging apparatus (11) adapted to capture images (6) from a surrounding of the motor vehicle (1), and
- a data processing apparatus (14) adapted to perform image processing on the images (6) captured by the imaging apparatus (11), wherein said image processing comprises executing an object detector (300) adapted to detect objects (201, 202) in captured images (6), yielding a plurality of object candidates (203, 204),
**characterized in that** the data processing apparatus (14) is adapted to execute a plausibility checker (102) adapted to estimate, on the basis of a comparison (102a) of properties of any two object candidates (203, 204) output by the object detector (300), whether a first object candidate (203) belongs to a light reflection (201) of an object (202) corresponding to a second object candidate (204).

2. The vision system according to claim 1, **characterized in that** the plausibility checker (102) takes into account in said estimation whether the longitudinal distance between the two object candidates (203, 204) to be compared falls below a predefined value.

3. The vision system according to any one of the preceding claims, **characterized in that** the plausibility checker (102) takes into account in said estimation whether mirroring occurs between features, in particular bright features like rear lights, brake lights or license plate, of the two objects candidates (203, 204) to be compared.

4. The vision system according to claim 3, **characterized in that** the plausibility checker (102) takes into account in said estimation whether mirroring features have the same color, or a color mainly in the same color range.

5. The vision system according to any one of the preceding claims, **characterized in that** the plausibility checker (102) takes into account in said estimation whether the two object candidates (203, 204) to be compared are fully visible in the captured image (6).

6. The vision system according to any one of the preceding claims, **characterized in that** the plausibility checker (102) takes into account in said estimation whether the two object candidates (203, 204) to be compared are positioned within a same lane (4) of the road and/or the lateral distance between said two object candidates (203, 204) is smaller than a predefined value.

7. The vision system according to any one of the preceding claims, **characterized in that** the plausibility checker (102) takes into account in said estimation whether a first object candidate (203) is closer to the ego vehicle (2) than a second object candidate (204).

8. The vision system according to any one of the claims 2 to 7, **characterized in that** the plausibility checker (102) estimates whether the first object candidate (203) belongs to the reflection (201) depending on one or more of said conditions is fulfilled.

9. The vision system according to any one of the preceding claims, **characterized in that** the plausibility checker (102) pre-identifies pairs of object candidates (203, 204) which are to be compared.

10. The vision system according to any one of the preceding claims, **characterized in that** a pre-condition checker (105) is executed prior to the plausibility checker (102), said pre-condition checker (105) checking pre-conditions for mirroring.

11. The vision system according to claim 10, **characterized in that** pre-conditions for mirroring comprise the wetness of the road and/or ambient light conditions.

12. The vision system according to any one of the preceding claims, **characterized in that** the plausibility checker (102) uses feature point tracking to identify and/or track the reflection (201) and/or the second object (202).

13. The vision system according to any one of the preceding claims, **characterized in that** the plausibility checker (102) computes a confidence indicator for the objects candidates (203, 204) as being reflected objects (201).

14. The vision system as claimed in any one of the preceding claims, **characterized in that** object candidates (203) determined to originate from a light reflection (201) of an object (202) are discarded in the further processing of the object candidates (203, 204).

15. A vision method for a motor vehicle (1), comprising
- capturing images (6) from a surrounding of the motor vehicle (1) with an imaging apparatus (11), and
- performing image processing on the images (6) captured by the imaging apparatus (11) by a data processing apparatus (14), wherein said image processing comprises executing an object detector (300) adapted to detect objects (201, 202) in captured images (6), yielding a plurality of object candidates (203, 204),
**characterized in that** executing a plausibility checker (102) by the data processing apparatus (14), the plausibility checker (102) estimates, on the basis of a comparison (102a) of properties of any two object candidates (203, 204) output by the object detector (300), whether a first object candidate (203) belongs to a light reflection (201) of an object (202) corresponding to a second object candidate (204).
